# EUROPEAN PATENT APPLICATION

(11) **EP 4 851 854 A1**
(43) Date of publication of application: **09.12.2026**
(21) Application number: 25305817.6
(22) Date of filing: 04.06.2025
(51) Int. Cl.: G06K 19/077

(54) **HAPTIC ELECTRONIC DOCUMENT, AND MANUFACTURING METHOD**

(71) Applicant: IDEMIA France, 92400 Courbevoie (FR)
(72) Inventor: Sirieix, Laurent, 92400 COURBEVOIE (FR); Liu, Chase, 92400 COURBEVOIE (FR)
(74) Representative: Santarelli

(57) **Abstract**

The invention deals with an electronic document (200) comprising an inlay (100), a haptic module (106), mounted in the inlay, a front assembly (201), covering the inlay; and a front releasing layer (205), at least a part of which is arranged between at least a part of the inlay and at least a part of the front assembly, at least a part of the haptic module (106) being separated from the front assembly owing to the front releasing layer (205). The invention also deals with a manufacturing method of such an electronic document (200).

## Description

### Technical field

The invention relates to an electronic document, the electronic document being for example a card, such as a smart card, for contact and/or contactless use, for example a dual-interface card, for example such as a bankcard, or credit card It also relates to a method for manufacturing such an electronic document.

### Background of the invention

When using an electronic document, it can be useful to get information from the document when a function is performed, or when an event occurs.

To this end, an electronic document, like a card as mentioned above, can comprise light-emitting components such as light-emitting diodes (LEDs) or organic light-emitting diodes (OLEDs) and their controllers. These light sources may for example act as user interface.

However, such light-emitting component requires to make a hole on a surface layer of the electronic document, or to make it transparent enough for a user to be able to see it.

Besides, if an environment in which the electronic document comprising such a light-emitting component is used is very bright, it may be very difficult for the user to identify whether the light-emitting components is switched on or not.

### Summary of the invention

It is therefore an object of the invention to provide an electronic document comprising:
- an inlay,
- a haptic module, mounted in the inlay,
- a front assembly, covering the inlay, and
- a front releasing layer, at least a part of which is arranged between at least a part of the inlay and at least a part of the front assembly, at least a part of the haptic module being separated from the front assembly owing to the front releasing layer.

Such an electronic document is thus configured to vibrate when a predetermined event occurs, for example when a bank transaction, like a payment occurs.

An inlay refers to an assembly inserted into a thickness of a body of the electronic document.

The inlay comprises for example a support made of plastic, for example at least one among:
- ABS (acrylonitrile butadiene styrene),
- PVC (polyvinyl chloride),
- PC (polycarbonate),
- PE (polyethylene)
- PET (polyethylene terephthalate),
- PEEK (polyetheretherketone),
- PEN (polyethylene naphthalate).

For example, the support of the inlay may have a thickness comprised between about 100 µm and 600 µm.

In some example embodiments, the inlay can comprise an opening configured to form at least a part of a cavity of the electronic document, cavity in which an electronic module may be inserted.

For example, the inlay can comprise a first wire radiofrequency antenna which is formed from a conductive wire embedded in the support of the inlay, and ends of which are soldered to terminals of a chip. For example, the chip belongs to the electronic module.

For example, the first antenna is formed along a periphery of the support of the inlay. According to one example embodiment, the inlay comprises a second wire radiofrequency antenna which is formed from a conductive wire embedded in the support of the inlay, and ends of which are soldered to terminals of the haptic module. For example, the second antenna is configured to communicate with an external terminal, for example a payment terminal, the terminal being configured to provide energy to the haptic module in order to vibrate, through the second antenna.

For example, at least a part of the second antenna is surrounded by at least a part of the first antenna.

According to one example embodiment, the haptic module comprises a vibrating component.

For example, the vibrating component comprises at least one strip, also named blade, which is configured to vibrate.

Such a strip is for example made of a ceramic material.

According to another example, the vibrating component comprises at least one membrane, which is configured to vibrate.

For example, the membrane, when in a rest configuration, is arranged parallel to the front assembly, in particular to an outer surface of the front assembly.

For example, the haptic module comprises a piezo-electric component, for example a flexible piezoelectric composite (FPC) module, or a ceramic base component for haptic.

For example, the piezo-electric component is configured to make the vibrating component, for example the strip, vibrate according to a current voltage input.

For example, the vibrating component is configured to vibrate at a frequency comprised between about 10 Hz and 500 Hz, for example between 10 Hz and 200 Hz, preferably between 10 Hz and 15 Hz.

According to one example embodiment, the document may also comprise an electronics module configured to supply power to and control, for example a frequency, the haptic module.

The front assembly here means a stack, comprising at least one layer, which is usually applied over the inlay.

According to one example embodiment, the front assembly comprises at least one inner layer which is made of plastic, for example one among:
- ABS (acrylonitrile butadiene styrene),
- PVC (polyvinyl chloride),
- PC (polycarbonate),
- PE (polyethylene)
- PET (polyethylene terephthalate),
- PEEK (polyetheretherketone),
- PEN (polyethylene naphthalate).

The inner layer of the front assembly here designates a layer of the front assembly which is in direct contact with the front releasing layer.

For example, the inner layer of the front assembly may have a thickness comprised between about 10 µm and 60 µm.

According to one example embodiment, the front assembly comprises a front overlay, the inner layer being arranged between the front overlay and the inlay.

For example, the front overlay is the outermost layer of the front assembly.

For example, the front overlay may have a thickness comprised between about 40 µm and 70 µm.

According to one example embodiment, the front overlay may comprise a magstripe. According to one example embodiment, the front assembly comprises a printing ink layer.

For example, the printing ink layer of the front assembly is arranged between the front overlay and the inner layer of the front assembly.

For example, the printing ink layer of the front assembly may have a thickness comprised between about 10 µm and 25 µm.

According to the invention, the front releasing layer is arranged between at least a part of the inlay and at least a part of the front assembly.

The front releasing layer enables to prevent a binding or bonding, for example sticking, between the front assembly and at least a part of the haptic module.

Indeed, when the electronic document is manufactured, the inlay and the front assembly are generally laminated together.

Laminating leads to a softening to the layers, so that they are coupled one to each other in order to manufacture the electronic document.

When a haptic module is integrated, it arose that the front assembly, in particular the inner layer of the front assembly, also sticks to the haptic module, which therefore prevents the haptic module to vibrate.

Such a front releasing layer is therefore configured to avoid such a link between at least a vibrating part of the haptic module and the front assembly.

The front releasing layer is for example configured to arrange a gap between at least a part of the haptic module and the front assembly, in particular the inner layer, providing enough space to at least a part of the haptic module for it to be able to vibrate.

According to an example embodiment, the front releasing layer comprises a layer of polyurethane (PU), for example a PU film.

Such a layer means a layer made of at least 90% of polyurethane.

Such a layer does not bind to the haptic module during lamination, but binds to the front assembly, in particular to the inner layer.

For example, the layer of polyurethane has a thickness comprised between about 10 µm and 40 µm.

The front assembly, in particular the inner layer, is so spaced apart from at least a part of the haptic module of a distance which is about equal to the thickness of the layer of polyurethane.

For example, the front releasing layer comprises a window, the window being cut in the front releasing layer over at least a part of the haptic module, for example over the vibrating component.

The front releasing layer then acts as a spacer between at least a part of the haptic module, for example the vibrating component, and the front assembly.

According to an example embodiment, the front releasing layer comprises a layer of ink which is printed over at least a part of an internal surface of the front assembly, for example an internal surface of the inner layer of the front assembly, and/or over at least a part of the haptic module, for example over the vibrating component.

For example, the ink is chosen according to a chemical affinity with the material of the inner layer, in order to provide a satisfying adherence to the front assembly.

However, the ink is also chosen so that it has no, or very low, chemical affinity with the haptic module so that it will not prevent the module from vibrating.

For example, the layer of ink may have a thickness comprised between about 3 µm to 20 µm.

For example, the layer of ink may be transparent.

According to one example embodiment, the electronic document comprises a back assembly, the inlay being arrange between the front assembly and the back assembly. According to one example embodiment, the back assembly comprises an inner layer which is made of plastic, for example one among:
- ABS (acrylonitrile butadiene styrene),
- PVC (polyvinyl chloride),
- PC (polycarbonate),
- PE (polyethylene)
- PET (polyethylene terephthalate),
- PEEK (polyetheretherketone),
- PEN (polyethylene naphthalate).

For example, the inner layer of the back assembly may have a thickness comprised between about 10 µm and 60 µm.

According to one example embodiment, the back assembly comprises at least one layer which is made of metal, for example one among:
- Aluminium,
- Titanium,
- Iron,
- Stainless steel,
- Tungsten steal,
- Manganese steal.

For example, the metal layer of the back assembly may have a thickness comprised between about 200 µm and 600 µm.

According to one example embodiment, the electronic document comprises a layer of ferrite or a magnetic shield, which may be arranged between the metal layer and at least one antenna among the first antenna and the second antenna of the inlay.

For example, the layer of ferrite or the magnetic shield has a thickness comprised between about 50 µm and 100 µm.

According to one example embodiment, the back assembly comprises a back overlay, the inner layer of the back assembly being arranged between the back overlay and the inlay.

For example, the back overlay is the outermost layer of the back assembly.

For example, the back overlay may have a thickness comprised between about 40 µm and 70 µm.

According to one example embodiment, the back assembly comprises a printing ink layer.

For example, the printing ink layer of the back assembly is arranged between the back overlay and the inner layer of the back assembly.

For example, the printing ink layer of the back assembly may have a thickness comprised between about 10 µm and 25 µm.

According to one example embodiment, the electronic document may comprise a back releasing layer, which may be arranged between the inner layer of the back assembly and at least a part of the inlay.

According to an example embodiment, the back releasing layer comprises a layer of polyurethane (PU), for example a PU film.

Such a layer means a layer made of at least 90% of polyurethane.

For example, the layer of polyurethane of the back releasing layer has a thickness comprised between about 10 µm and 40 µm.

For example, the back releasing layer comprises a window, the window being cut in the back releasing layer over at least a part of the haptic module, for example over the vibrating component.

The back releasing layer then acts as a spacer between at least a part of the haptic module, for example the vibrating component, and the back assembly.

According to an example embodiment, the back releasing layer comprises a layer of ink which is printed over at least a part of an internal surface of the back assembly, for example an internal surface of the inner layer of the back assembly, and/or over at least a part of the haptic module, for example over the vibrating component.

For example, the ink is chosen according to a chemical affinity with the material of the inner layer, in order to provide a satisfying adherence to the front assembly.

However, the ink is also chosen so that it has no, or very low, chemical affinity with the haptic module so that it will not prevent the module from vibrating.

For example, the layer of ink which is printed over at least a part of an internal surface of the back assembly may have a thickness comprised between about 3 µm to 20 µm. For example, the layer of ink may be transparent.

The back releasing layer may be identical to the front releasing layer.

According to another aspect, the invention also provides a method for manufacturing an electronic document, the method comprising:
- Providing an inlay, and at least one haptic module mounted on the inlay;
- Providing a front assembly;
- Providing a front releasing layer;
- Arranging the front releasing layer between at least a part of the inlay and the front assembly; and
- Laminating the inlay, the front releasing layer and the front assembly together.

The method comprises analogous features as those of the electronic documents, and provides similar advantages.

According to one example embodiment, the method also comprises:
- Providing a back assembly;
- Laminating the inlay and the back assembly together.

According to one example embodiment, the method also comprises:
- Providing a back releasing layer;
- Arranging the back releasing layer between at least a part of the inlay and the back assembly; and
- Laminating the inlay, the back releasing layer and the back assembly together.

According to one example embodiment, the method may also comprise:
- Providing an ink to form the front releasing layer;
- Providing a mesh comprising between about 120 to 160 threads/cm;
- Squeegeeing the ink over at least a part of the inlay and/or at least a part of the front assembly, through the mesh.

For example, the squeegee is comprised between 60 shA and 150 shA hardness (durometer), for example about 70 shA.

According to one example embodiment, the method also comprises:
- polymerizing the ink under a UV dose of between about 100 mJ/cm² and 140 mJ/cm².

### Brief description of the drawings

Additional features and advantages of the present invention are described in, and will be apparent from, the description of the presently preferred embodiments which are set out below with reference to the drawings in which:
Figure 1 diagrammatically represents an inlay according to a first example embodiment;
Figure 2 diagrammatically represents an inlay according to a second example embodiment;
Figure 3 diagrammatically represents an inlay according to a third example embodiment;
Figure 4 diagrammatically represents an inlay according to a fourth example embodiment;
Figure 5 diagrammatically represents an inlay according to a fifth example embodiment;
Figure 6 diagrammatically represents an inlay according to a sixth example embodiment;
Figure 7 diagrammatically represents an inlay according to a seventh example embodiment;
Figure 8 diagrammatically shows a cross-section of an inlay according to one example embodiment;
Figure 9 diagrammatically shows a cross-section of an electronic document according to a first example embodiment;
Figure 10 diagrammatically shows a cross-section of an electronic document according to a second example embodiment;
Figure 11 diagrammatically shows a cross-section of an electronic document according to a third example embodiment; and
Figure 12 diagrammatically shows a cross-section of an electronic document according to a fourth example embodiment.

### Detailed description of the invention

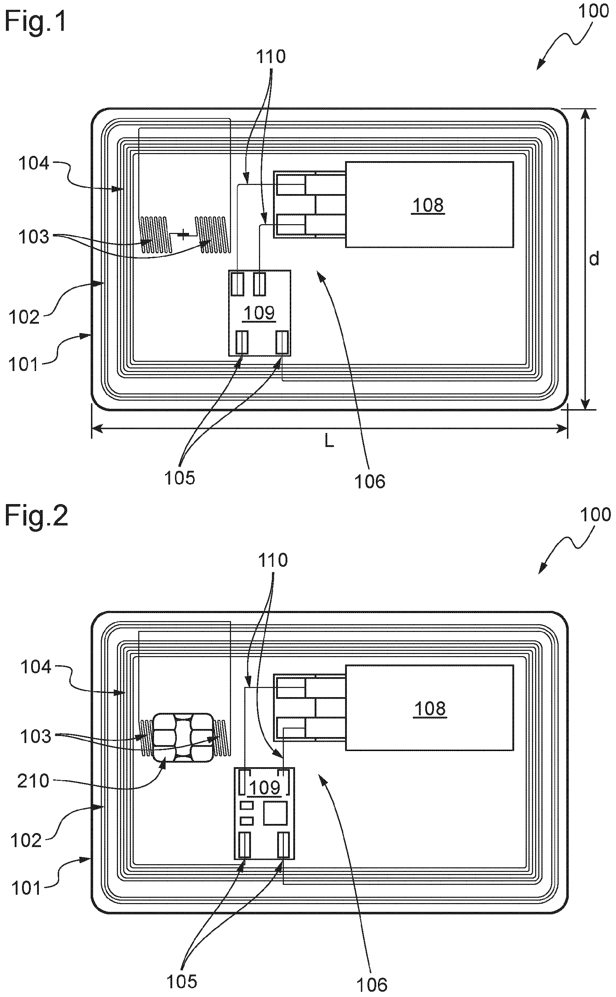

Figure 1 diagrammatically represents an inlay 100 according to a first example embodiment.

The inlay 100 comprises a support 101.

The support 101 usually is a sheet, a contour of which is at most of a size and/or shape of an electronic document in which it shall be inserted.

Here, the support 101 has a rectangular contour, with a length L and a width d.

The width d is smaller, or at most equal, to the length L.

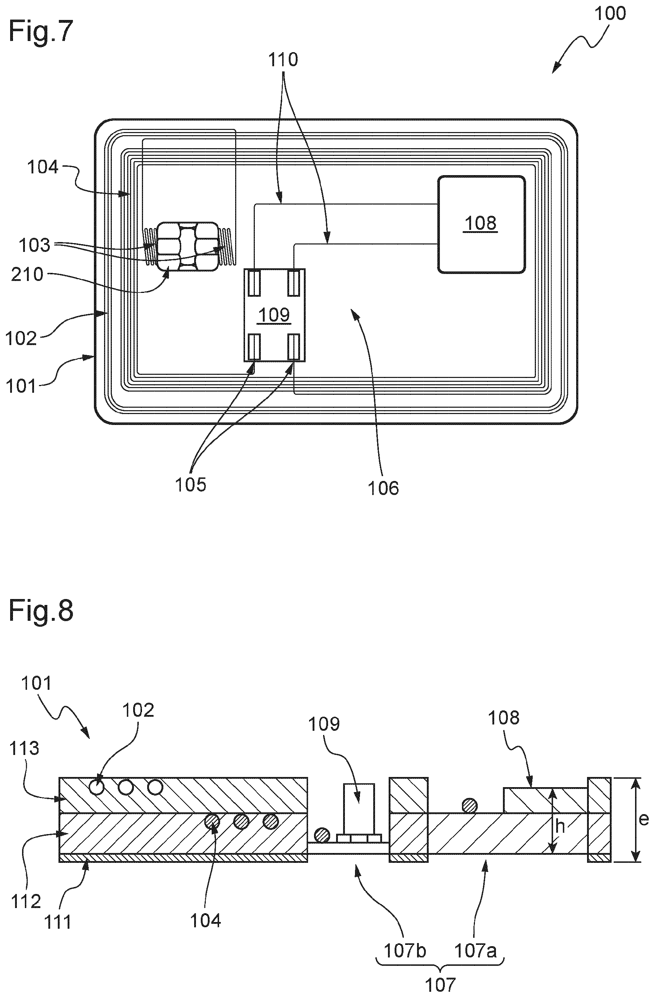

The support 101 also has a thickness e, as illustrated in figure 8.

The thickness e is smaller than the length L and the width d.

In a general manner, the thickness e is comprised between about 100 µm and 600 µm. The support 101 is made of plastic, for example one among:
- ABS (acrylonitrile butadiene styrene),
- PVC (polyvinyl chloride),
- PC (polycarbonate),
- PE (polyethylene)
- PET (polyethylene terephthalate),
- PEEK (polyetheretherketone),
- PEN (polyethylene naphthalate).

The inlay 100 also comprises here a first wire radiofrequency antenna 102.

The first wire radiofrequency antenna 102 is formed from a conductive wire which is embedded in the support 101 of the inlay 100.

The conductive wire of the first wire radiofrequency antenna 102 comprises coils, and ends 103 which are configured to be soldered to terminals of a chip which can belong to an electronic module 210 as illustrated in figure 2.

Here, the coils of the first antenna 102 are formed along a periphery of the support 101 of the inlay.

The inlay 100 also comprises a second wire radiofrequency antenna 104.

The second wire radiofrequency antenna 104 is formed from a conductive wire which is embedded in the support 101 of the inlay 100.

The conductive wire of the second wire radiofrequency antenna 104 comprises coils, and ends 105 which are configured to be soldered to terminals of a haptic module 106.

The second antenna 104 is configured to communicate with an external terminal, for example a payment terminal, the terminal being configured to provide energy to the haptic module 106 in order to vibrate, through the second antenna 104.

In the present embodiment, the coils of second antenna 104 are surrounded by the coils of the first antenna 102.

Conversely, the coils of the first antenna 102 are arranged between the coils of the second antenna 104, and the contour of the support 101.

The inlay 100 also comprises the haptic module 106 according to a first example embodiment, which is mounted on the support 101 of the inlay 100.

According to one example embodiment as illustrated in figure 8, at least of part of the haptic module 106 can be mounted in a hole 107 which is cut in the support 101.

The haptic module 106 comprises a vibrating component 108 and a piezo-electric component 109.

The piezo-electric component 109 is for example a flexible piezoelectric composite (FPC) module.

For example, the piezo-electric component 109 is configured to make the vibrating component 108 vibrate according to a current voltage input.

As shown in figure 1, the ends 105 of the second antenna 104 are connected, i.e. plugged, to the piezo-electric component 109.

When the second antenna 104 is energised by an external terminal, it is then configured to provide energy to the piezo-electric component 109 which, in turn, makes the vibrating component 108 vibrate.

To this end, the haptic module 106 comprises wires 110 which connect the vibrating component 108 and the piezo-electric component 109 one to each other.

The vibrating component 108 can comprise at least one strip or blade, which is configured to vibrate.

For example, the vibrating component 108 is configured to vibrate at a frequency comprised between about 10 Hz and 500 Hz, for example between 10 Hz and 200 Hz, preferably between 10 Hz and 15 Hz.

Such a strip is for example made of a ceramic material.

In figure 1, the vibrating component 108 is arranged near by a corner of the support 101, which is here drawn as a top right hand side corner.

The piezo-electric component 109 is here arranged near by a side of the support 101, which is here drawn as a bottom edge of the support 101.

The ends 103 of the conductive wire of the first wire radiofrequency antenna 102 are here arranged so that the module can be placed according to the standards for dual card for example.

As illustrated by figures 2 to 7, the haptic module 106 can comprise various types of vibrating component 108 and/or piezo-electric component 109.

Further, the vibrating component 108 and/or the piezo-electric component 109 can be arranged at various locations in the inlay 100, as described below.

The types and location of the vibrating component 108 and/or the piezo-electric component 109 can be combined as desired, and figures 2 to 7 show some example embodiments.

The embodiment illustrated in figure 2 differs from the one of figure 1 in that the electronic module 210 is illustrated, as mentioned above.

Such an electronic module 210 is then connected (plugged) to the ends of the conductive wire of the first wire radiofrequency antenna 102.

Figure 2 also shows a haptic module 106 according to a second example embodiment in which the piezo-electric component 109 which differs from the one of figure 1.

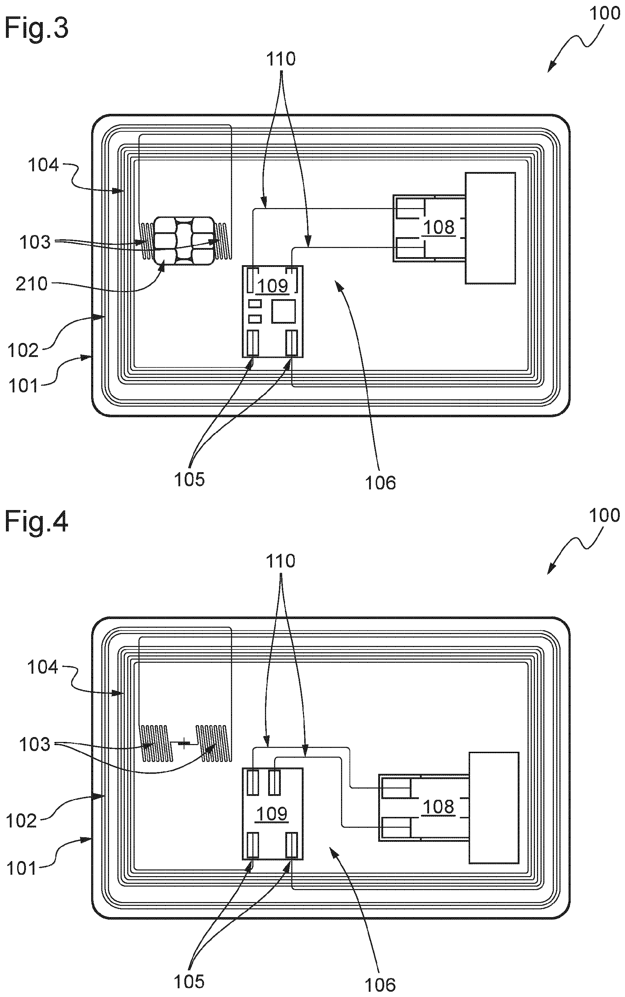

The embodiment illustrated in figure 3 differs from the one of figures 1 and 2 in that it comprises a haptic module 106 according to a third example embodiment, in which the vibrating component 108 has a different shape.

The embodiment illustrated in figure 4 differs from the one of figure 1 in that it comprises a haptic module 106 according to a fourth example embodiment in which the vibrating component 108 is similar to that of figure 3 but is arranged at a different location, which is here drawn as a bottom right hand side corner, and the piezo-electric component 109 is as the one of figure 1.

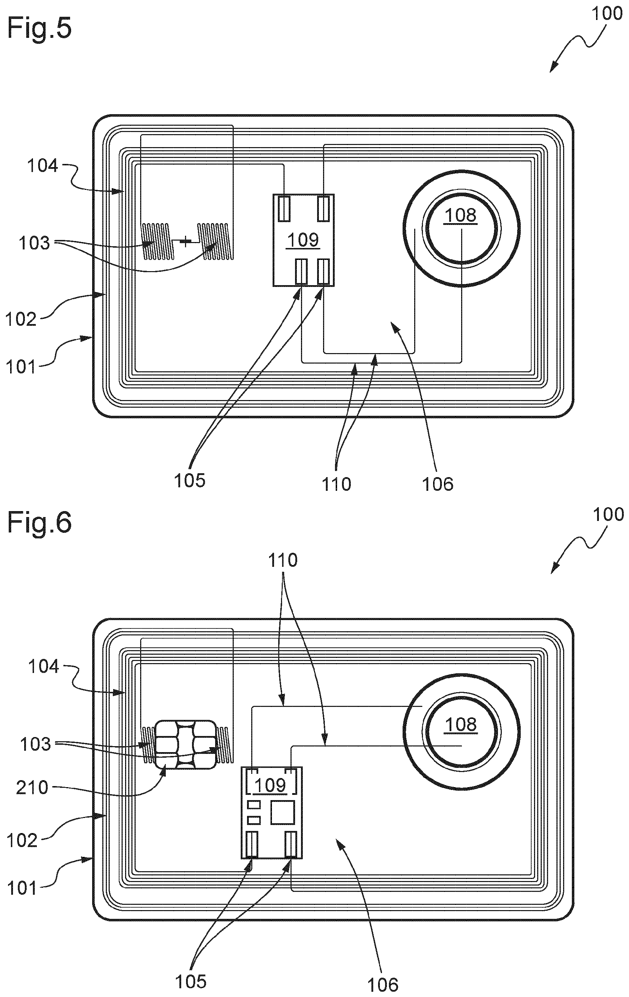

The embodiment of figure 5 differs from the embodiment of figure 1 in that it comprises a haptic module 106 according to a fifth example embodiment in which the vibrating component 108 comprises a membrane, which is configured to vibrate, instead of the strip. For instance, the membrane is a flat sheet, and could be of a circular shape as illustrated in the figure 5 but could have other shapes.

The membrane, when in a rest configuration, is configured to be arranged parallel to a front assembly, in particular to an outer surface of the front assembly, as described below.

In addition, the piezo-electric component 109 is similar to the one of figures 1 and 4, but is here arranged further from the bottom edge of the support of the inlay compared to the embodiment of figure 1, in other words near by a centre of the support 101 of the inlay. Besides, it is plugged to the second antenna 104, via ends 105, from a part of the antenna 104 which is opposite to the bottom edge described above.

The embodiment illustrated in figure 6 differs from the one of figure 5 in that the electronic module 210 is illustrated, as mentioned above, as in figures 2 and 3.

The embodiment of figure 6 also differs from the embodiment of figure 5 in that it comprises a haptic module 106 according to a sixth example embodiment in which the vibrating component 108 is as in figure 5, and the piezo-electric component 109 is as the one of figures 2 and 3. Thus, the piezo-electric component 109 is plugged to the second antenna 104, via the ends 105, from a part of the second antenna 104 which is along the bottom edge described above.

The embodiment illustrated in figure 7 differs from the one of figure 1 in that the electronic module 210 is illustrated, as mentioned above, as in figures 2, 3 and 6.

The embodiment of figure 7 also differs from the embodiment of figure 1 in that it comprises a haptic module 106 according to a seventh example embodiment in which the vibrating component 108 is of a fourth type, and the piezo-electric component 109 is of a third type. Besides, the piezo-electric component 109 is plugged to the second antenna 104, via the ends 105, from a part of the second antenna 104 which is along the bottom edge described above.

Figure 8 diagrammatically shows a cross-section of an inlay 100 according to one example embodiment, for example any embodiment of figures 1 to 7.

The support 101 can comprise a stack of at least one layer.

In the illustrated embodiment, the support 101 comprises three layers 111, 112, 113:
- A first, lower, layer 111, which is for example made of PVC, and having a thin thickness, for example here about 50 µm;
- A second, medium, layer 112, which is for example made of PVC too, and having a thickness of about 150 µm; and
- A third, upper, layer 113, which is for example made of PVC too, and having a thickness of about 250 µm.

According to this example, the second antenna 104 is embedded in the medium layer, between the medium layer and the upper layer. The first antenna 102 is embedded in the upper layer, near by a surface of the support 101. The first antenna 102 can be visible on the surface of the support 101.

The support 101 also comprises the hole 107 in which the haptic module 106 is arranged.

The hole 107 comprises two parts 107a, 107b. A first part 107a of the two parts is configured to receive the vibrating component 108 and a second part 107b of the two parts is configured to receive the piezo-electric component 109.

According to this illustrated example, the haptic module 106 has a maximal height h which is at most equal to the thickness e of the support 101. Thus, the haptic module 106 does not stick out from the support 101.

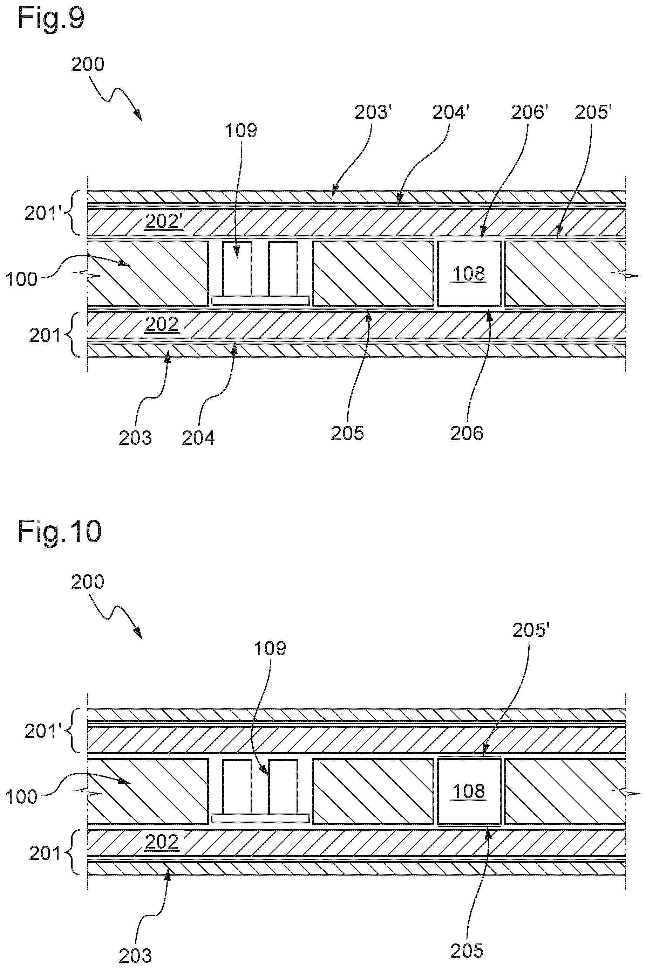

Figure 9 to 12 diagrammatically show a cross-section of an electronic document 200 according to example embodiments, in which the inlay 100 can be of any type described above, in reference to any of figures 1 to 8.

Figures 9 and 10 show example embodiments in which the electronic document 200 comprises a front assembly 201, covering the inlay 100, here over a front surface drawn as a lower side.

The front assembly 201 here means a stack, comprising at least one layer, which is applied over the inlay 100.

The front assembly 201 here comprises an inner layer 202 which is made of plastic, for example one among:
- ABS (acrylonitrile butadiene styrene),
- PVC (polyvinyl chloride),
- PC (polycarbonate),
- PE (polyethylene)
- PET (polyethylene terephthalate),
- PEEK (polyetheretherketone),
- PEN (polyethylene naphthalate).

The front assembly 201 also comprises a front overlay 203, the inner layer 202 being arranged between the front overlay 203 and the inlay 100.

The front overlay 203 is the outermost layer of the front assembly.

The front overlay 203 here has a thickness of about 60 µm.

As illustrated in this figure, the front assembly 201 also comprises a printing ink layer 204.

The printing ink layer 204 of the front assembly is arranged between the front overlay 203 and the inner layer 202 of the front assembly.

The printing ink layer 204 of the front assembly 201 here has a thickness of about 15 µm.

The electronic document 200 also comprises a front releasing layer 205.

Here, the front releasing layer 205 is arranged between the inlay 100 and the front assembly 201.

The haptic module 106 is then separated from the front assembly 201 owing to the front releasing layer 205.

The front releasing layer 205 enables to prevent a binding or bonding, for example sticking, between the front assembly 201 and at least a part of the haptic module 106, for example due to a lamination process.

In the example embodiment of figure 9, the front releasing layer comprises a layer of polyurethane (PU). Such a layer means a layer made of at least 90% of polyurethane. The layer of polyurethane has here a thickness of about 20 µm.

Besides, the front releasing layer 205 comprises a window 206.

The window 206 is cut in the front releasing layer 205 over at least a part of the haptic module, for example here over the vibrating component 108.

The front releasing layer 205 then acts as a spacer between the vibrating component 108 and the front assembly 201.

In the illustrated embodiment of figure 9, the electronic document 200 is symmetrical on either side of the inlay 100.

Thus, the electronic document 200 comprises a back assembly 201', the inlay being arrange between the front assembly 201 and the back assembly 201'.

Here, the back assembly 201' is similar to the front assembly 201.

The back assembly 201' comprises an inner layer 202' which is made of plastic, for example one among:
- ABS (acrylonitrile butadiene styrene),
- PVC (polyvinyl chloride),
- PC (polycarbonate),
- PE (polyethylene)
- PET (polyethylene terephthalate),
- PEEK (polyetheretherketone),
- PEN (polyethylene naphthalate).

For example, the inner layer of the back assembly has a same thickness as the thickness of the inner layer of the front assembly.

The back assembly 201' also comprises a back overlay 203', the inner layer of the back assembly being arranged between the back overlay and the inlay.

The back overlay is here the outermost layer of the back assembly.

The back assembly 201' also comprises a printing ink layer 204', which is arranged between the back overlay 203' and the inner layer 202' of the back assembly 201'. The printing ink layer 204' of the back assembly 201' has for example a thickness of about 15 µm too.

Similarly, the electronic document 200 here comprises a back releasing layer 205', which is arranged between the inner layer 202' of the back assembly and the inlay 100. The back releasing layer comprises a layer of polyurethane (PU) too. Such a layer means a layer made of at least 90% of polyurethane.

The layer of polyurethane of the back releasing layer 205' has a thickness of about 20 µm too.

In addition, the back releasing layer 205' comprises a window 206', which is cut in the back releasing layer over at least a part of the haptic module, here over the vibrating component 108 too.

The back releasing layer 205' then acts as a spacer between the vibrating component 108 and the back assembly 201'.

The second example embodiment illustrated in figure 10 differs from the embodiment of figure 9 in that the front releasing layer 205 comprises a layer of ink which is printed over at least a part of an internal surface of the front assembly 201, in particular over a part of an internal surface of the inner layer 202 of the front assembly 201, and/or over at least a part of the haptic module 106, for example here over the vibrating component 108.

The ink is chosen according to a chemical affinity with the material of the inner layer, in order to provide a satisfying adherence to the front assembly.

However, the ink is also chosen so that it has no, or very low, chemical affinity with the haptic module so that it will not prevent the module from vibrating.

For example, the layer of ink may have a thickness of about 3-20 µm.

For example, the ink of the front releasing layer comprises RELVAR-V01 provided by VFP Ink Technologies, which is non CMR UV Varnish for release application on PVC.

In addition here, the back releasing layer 205' also comprises a layer of ink which is printed over at least a part of an internal surface of the back assembly 201', for example an internal surface of the inner layer 202' of the back assembly, and/or over at least a part of the haptic module 106, for example here over the vibrating component 108.

The ink of the back releasing layer 205' can be the same as the ink of the front releasing layer 205. Besides, the layer of ink of the back releasing layer 205' can have a same thickness as the layer of ink of the front releasing layer 205.

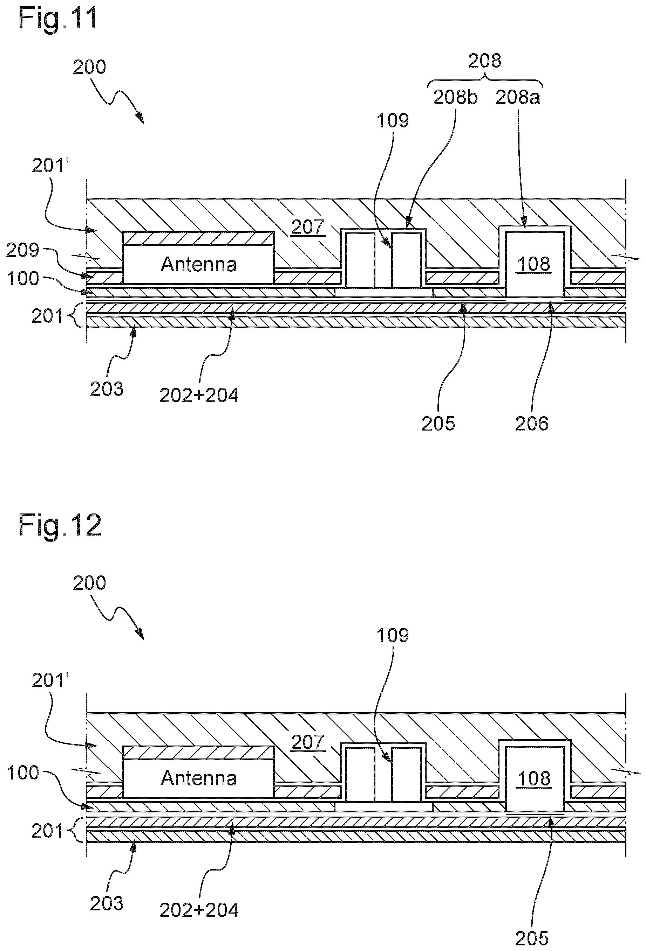

The third example embodiment illustrated in figure 11 differs from the embodiment of figure 9 in that the electronic document is at least in part made of metal.

More particularly, the back assembly here comprises at least one metal layer 207, for example made of a metal chosen among:
- Aluminium,
- Titanium,
- Iron,
- Stainless steel,
- Tungsten steal,
- Manganese steal.

The front assembly 201 is for example same as described in connection with figure 9 or 10.

In the embodiment illustrated in figure 11, the front releasing layer 205 comprises a layer of polyurethane (PU), for example as in figure 9. The front releasing layer 205 comprises a window 206, cut in the front releasing layer 205, over at least a part of the haptic module, and more specifically here over the vibrating component 108.

Further, in the illustrated embodiment, the haptic module 106 is higher than a thickness of the support 101 of the inlay 100, and extends on one side into the metal layer 207.

Therefore, the metal layer 207 comprises at least one cavity 208 in which at least a part of the haptic module 106 can be comprised. Here, the cavity 208 comprises a first slot 208a configured to receive a part of the vibrating component 108, and a second slot 208b configured to receive a part of the piezo-electric component 109.

The electronic document then comprises a layer of ferrite 209, which is arranged between the metal layer and at least a part of the inlay. Here, the layer of ferrite 209 surrounds the haptic module 106. For example, the layer of ferrite 209 comprises at least one window through which the haptic module can extends, until the cavity 208 of the metal layer.

The fourth example embodiment illustrated in figure 12 differs from the embodiment of figure 11 in that the front releasing layer 205 comprises a layer of ink which is printed over at least a part of an internal surface of the front assembly 201, in particular over a part of an internal surface of the inner layer 202 of the front assembly 201, and/or over at least a part of the haptic module 106, for example here over the vibrating component 108, as in the embodiment of figure 10.

Such an electronic document, according to any embodiment of figure 1 to 12, can be manufactured by lamination.

The manufacturing method comprises for example:
- Providing an inlay 100, and at least one haptic module 106 mounted on the inlay, for example as described in connection with any of figures 1 to 8;
- Providing a front assembly 201, for example as shown in figures 9 to 12;
- Providing a front releasing layer 205, for example as shown in figures 9 to 12;
- Arranging the front releasing layer 205 between at least a part of the inlay 100 and the front assembly 201; and
- Laminating the inlay 100, the front releasing layer 205 and the front assembly 201 together.

For embodiments as illustrated in figures 9 and 10, the method also comprises:
- Providing a back assembly 201';
- Providing a back releasing layer 205';
- Arranging the back releasing layer 205' between at least a part of the inlay 100 and the back assembly 201'; and
- Laminating the inlay 100, the back releasing layer 205' and the back assembly 201' together.

For embodiments as illustrated in figures 11 and 12, the method also comprises:
- Providing a metal layer 207;
- Arranging the inlay 100 between the metal layer 207 and the front releasing layer 205; and
- Laminating the metal layer 207, the inlay 100, the front releasing layer 205 and the front assembly 201 together.

## Claims

1. Electronic document (200) comprising:
- an inlay (100),
- a haptic module (106), mounted in the inlay (100),
- a front assembly (201), covering the inlay (100), and
- a front releasing layer (205), at least a part of which is arranged between at least a part of the inlay (100) and at least a part of the front assembly (201), at least a part of the haptic module (106) being separated from the front assembly (201) owing to the front releasing layer (205).

2. Electronic document (200) according to claim 1, **characterized in that** the front releasing layer (205) comprises a layer of polyurethane.

3. Electronic document (200) according to any one of claims 1 or 2, **characterized in that** the front releasing layer (205) comprises a layer of ink which is printed over at least a part of an internal surface of the front assembly (201), for example an internal surface of an inner layer of the front assembly (201), and/or over at least a part of the haptic module (106).

4. Electronic document (200) according to any one of claims 1 to 3, **characterized in that** the electronic document comprises a back assembly (201'), the inlay (100) being arrange between the front assembly (201) and the back assembly (201').

5. Electronic document (200) according to claim 4, **characterized in that** the electronic document comprises a back releasing layer (205'), which may be arranged between an inner layer of the back assembly (201') and at least a part of the inlay (100).

6. Electronic document (200) according to any one of claims 4 or 5, **characterized in that** the back releasing layer (205') comprises a layer of ink which is printed over at least a part of an internal surface of the back assembly (201'), for example an internal surface of an inner layer of the back assembly (201'), and/or over at least a part of the haptic module (106).

7. Method for manufacturing an electronic document (200), the method comprising:
- Providing an inlay (100), and at least one haptic module (106) mounted on the inlay (100);
- Providing a front assembly (201);
- Providing a front releasing layer (205);
- Arranging the front releasing layer (205) between at least a part of the inlay (100) and the front assembly (201); and
- Laminating the inlay (100), the front releasing layer (205) and the front assembly (201) together.

8. Method according to claim 7, comprising:
- Providing a back assembly (201');
- Laminating the inlay (100) and the back assembly (201') together.

9. Method according to claim 8, comprising:
- Providing a back releasing layer (205');
- Arranging the back releasing layer (205') between at least a part of the inlay (100) and the back assembly (201'); and
- Laminating the inlay (100), the back releasing layer (205') and the back assembly (201') together.

10. Method according to any one of claims 7 to 9, comprising:
- Providing an ink to form the front releasing layer (205);
- Providing a mesh comprising between about 120 to 160 threads/cm;
- Squeegeeing the ink over at least a part of the inlay (100) and/or at least a part of the front assembly (201), through the mesh.
